Europäisches Patentamt

European Patent Office

Office européen des brevets

(11) Publication number: 0 327 353
A1

# (12) EUROPEAN PATENT APPLICATION

(21) Application number: 89300997.7

(22) Date of filing: 02.02.89

(51) Int. Cl.⁴: G 01 N 21/53

(30) Priority: 03.02.88 GB 8802330
22.12.88 GB 8830023

(43) Date of publication of application:
09.08.89 Bulletin 89/32

(84) Designated Contracting States: ES GR

(71) Applicant: LOUGHBOROUGH CONSULTANTS LIMITED
University of Technology
Loughborough LE11 3TF (GB)

(72) Inventor: Lloyd, Philip John
30 Quorn Close
Loughborough LE11 2AW (GB)

Sinclair, Ian
38 Cropston Avenue
Loughborough LE11 0PR (GB)

Maddocks, Nigel
56 Hunton Hill
Erdington Birmingham B23 7NC (GB)

(74) Representative: Bardo, Julian Eason et al
Abel & Imray Northumberland House 303-306 High Holborn
London, WC1V 7LH (GB)

(54) Device and method capable of detecting small particles in a fluid.

(57) A device capable of detecting individual particles of less than 10 microns in diameter in a fluid flowing through the device, includes a body (1) having a passageway (2) through which, in use, the fluid flows, a light source (13) for directing a beam of light into the passageway (2) and a light detector (15) for detecting scattered light from a small portion only of the cross-sectional area of the passageway (2). The arrangement is such that light from the light source (13) is unable to pass directly to the light detector (15).

The device is capable of detections very low concentrations of particles in fluids flowing through it at a high flow-rate.

FIG. 2.

## Description

## Device and method capable of detecting small particles in a fluid

This invention relates to a device and a method capable of detecting individual particles of less than 10 microns in diameter in a fluid.

There is a need for a device which can detect particles having a diameter of less than 10 microns in a fluid flowing through the device in industries requiring very clean fluid supplies. For example particles having a diameter in the range of 0.3 to 1 micron in the deionized water circuits required in the semi-conductor industry can damage the components being manufactured and, although filters can remove most of the particles, it is desirable to have means for detecting any particles which may remain to provide a warning should the concentration of those particles exceed a predetermined level. Similarly, it is desirable to be able to monitor the supplies of process chemicals and process gases used in the industry in the same way.

Devices for detecting particles having a diameter of less than 10 microns in fluids with very low flow rates do exist. In one form of device a small quantity of fluid is sampled and passed through a small cross-section passageway. All the particles in the sample are counted by illuminating the sample with a uniform beam of light and detecting light scattered by each of the particles as they pass through the beam. In order to detect and count the individual flashes of scattered light as each of the particles passes through the beam of light, the passageway must have a very small cross-sectional area (for example 1 to 5 mm$^2$) and a very low flow rate of fluid must be used (for example 0.1 litres per minute), thereby ensuring that only a few particles pass through the beam per unit time. This means, however, that the device cannot, usually, be installed directly in line in a fluid-distribution system carrying a much greater fluid flow-rate of, for example, 15 litres per minute. It must therefore be fitted in a specially constructed branch line and does not then monitor continuously the fluid flowing along the main line. Further, the devices presently available are prohibitively expensive so that, if used at all, only one such device can normally be afforded. When monitoring a large fluid-distribution system it is normally necessary therefore to transfer the device between several different sampling points so that continuous monitoring at each point is not possible and even a dramatic increase in particle concentration, for example as a result of failure of a filter, may go undetected.

According to the present invention there is provided a device capable of detecting individual particles of less than 10 microns diameter in a fluid flowing through the device, the device including a body having a passageway through which, in use, the fluid flows, a light source for directing a beam of light into the passageway and a light detector for detecting scattered light from a small portion only of the cross-sectional area of the passageway, the arrangement being such that light from the light source is unable to pass directly to the light detector.

As the light is detected from a small portion only of the cross-sectional area of the passageway, it is possible to detect individual particles even if a large cross-section passageway is used, thereby allowing the device to accommodate a high flow-rate of fluid through the passageway. The device may therefore be interposed in a pipeline in a fluid-distribution system to monitor the fluid flowing through the pipeline continuously without impeding the flow. By detecting light scattered by particles it is able to sense particles of sub-micron size, and because individual particles are detected, it is possible to measure very low concentrations of particles. The device is therefore able to detect very low concentrations of very small particles in fluids flowing through the device at a high rate, and may be used for particle-detection in either liquids or gases, for example deionized water, sea water (for example in the offshore oil industry), aviation fuel, hydrogen fluoride and environmental air.

The small portion of the cross-sectional area of the passageway from which light is detected may comprise less than 5% of the total cross-sectional area of the passageway.

The passageway may have a cross-sectional area of at least 100mm$^2$ enabling high flow rates of liquid to be accommodated.

The light detector may be arranged to detect forward-scattered light, with its optical axis subtending an angle of less than 90°, and advantageously less than 30° and preferably approximately 25° with the axis of the incident beam of light. Detecting forward-scattered light improves the ability of the device to detect very small particles which scatter only a small amount of light.

The light source may be arranged to direct a parallel beam of light into the passageway, and the diameter of the beam is preferably less than 2mm.

Alternatively, the light source may be arranged to bring the beam of light to a focus at a region within the passageway.

In an especially advantageous and preferred form of the invention, the light detector includes a light sensor and means for focusing light emanating from the small portion of the passageway onto the sensor. The scattered light will thereby be concentrated on the sensor, greatly increasing the sensitivity of the device. In the case where the beam of light is brought to a focus, the arrangement is preferably such that light scattered from the focal point of the beam is focused onto the light sensor.

The light source may include a laser, and the body may be provided with a first fluid-tight window through which, in use, the beam of light enters the passageway, and a second fluid-tight window through which the light detector receive the scattered light.

The output of the light detector may be connected to a signal-monitoring device which may be arranged to provide the same output in response to receipt of a signal from the light detector, regardless of the level of the signal, provided the level is above a predetermined threshold value. This enables the signal monitoring device to produce an output indicative of the number but not the size of the particles in the passageway. The signal-monitoring device may be connected to a counter and/or to an alarm system for providing a warning of the presence of an excessive number of particles, and/or to a printer for providing a permanent record of the output of the monitoring device. The signal-monitoring device may further be connected to a computer for processing the output of the signal-monitoring device.

The present invention further provides a device for detecting particles in a fluid, the device including a body having a passageway through which, in use, the fluid flows, a light source for directing an incident beam of light into the passageway and a light detector for detecting light scattered from a small portion of the passageway, the light detector including a light sensor and a lens for focusing light emanating from the small portion of the passageway onto the sensor, the optical axis of the light detector being angularly displaced from the axis of the incident beam by an amount sufficient to prevent the incident beam from falling directly upon the sensor.

The present invention yet further provides a fluid-distribution system including a particle-detecting device as described above and a pipeline for distributing a fluid, the particle-detecting device being interposed in the pipeline so that, in use, all the fluid distributed by the pipeline passes through the device.

The system may include a plurality of particle-detecting devices, all of which are connected to a computer for monitoring the number of particles at a plurality of different points around the system. The fluid-distribution system may be a deionised water distributing system.

Furthermore according to the present invention there is provided a method capable of detecting individual particles of less than 10 microns in diameter in a fluid, in which the fluid is caused to flow through a passageway, a beam of light is directed into the fluid in the passageway and light scattered from a small portion of the cross-sectional area of the passageway is detected without detecting the incident beam of light directly.

The small portion of the passageway may comprise less than 5% of the cross-sectional area of the passageway.

The passageway may have a cross-sectional area of at least 100mm$^2$.

The flow-rate of fluid through the passageway may be at least 1 litre per minute.

Forward-scattered light may be detected, with the optical axis of the detected light subtending an angle of less than 90°, and advantageously less than 30°, and preferably approximately 25°, with the axis of the incident beam of light.

By way of example, an embodiment of the invention will now be described with reference to the accompanying drawings, of which:

Figure 1 shows, in perspective, a device for detecting particles in a fluid,

Figure 2 is a cross-section along line II-II of Figure 1, and

Figures 3a and 3b show, diagrammatically, an optical arrangement incorporated in the device shown in Figure 1.

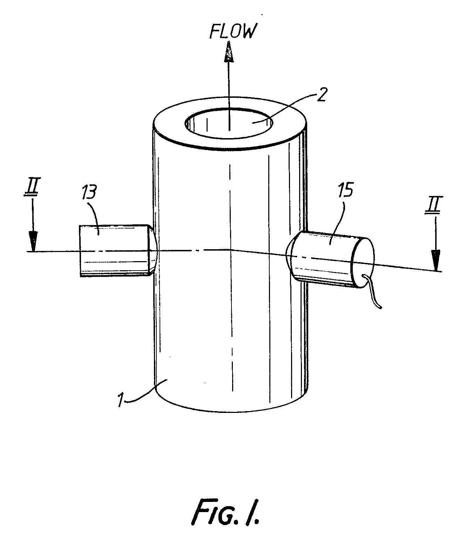

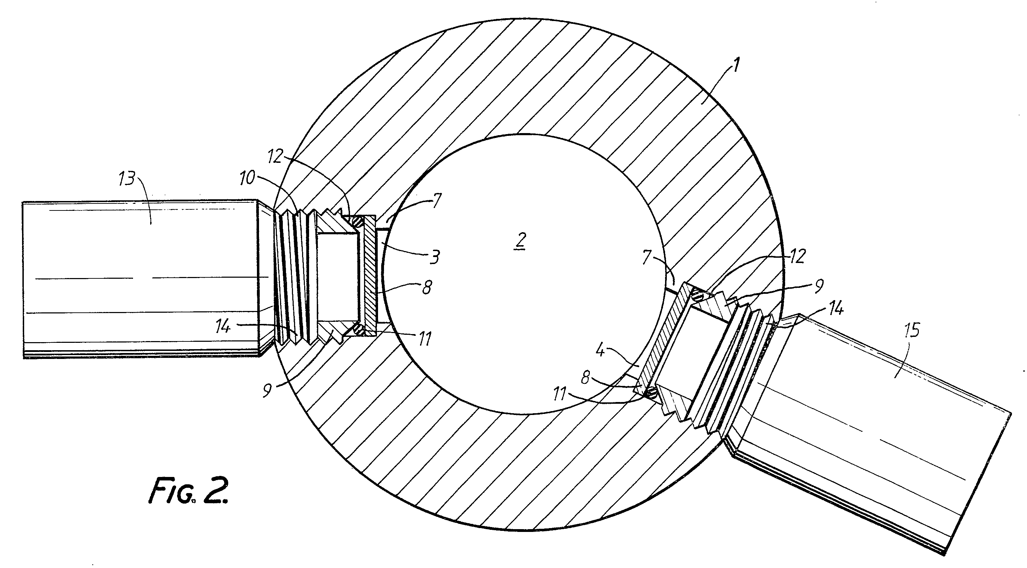

Referring first to Figs. 1 and 2, the particle-detecting device includes a body member 1 through which there extends a cylindrical passageway 2 having a diameter of 25mm. Extending through the cylindrical wall of the body member 1 are two cylindrical bores 3 and 4. The axes of the bores 3 and 4 are perpendicular to the longitudinal axis of the passageway 2 and they intersect one another at a point midway along the length of the passageway 2 and on the longitudinal axis thereof, where they subtend an angle of 155°. The axes of the bores 3 and 4 are coincident with the line II-II. The body member 1, for example, is constructed in one piece of PVDF.

At the inner end of each bore 3 and 4, there is provided a portion of slightly reduced diameter which forms an inwardly-extending lip 7. Positioned towards the inner end of each bore 3 and 4 to abut the lip 7 is a quartz window 8. The window 8 is urged towards the lip 7 by a hollow clamping screw 9 which engages a screw thread 10 provided at the outer end of each bore 3 and 4. An O-ring 11 is located between the window 8 and the clamping screw 9, and the face of the clamping screw which contacts the O-ring is provided with a bevelled surface 12 which, when the clamping screw is tightened, forces the O-ring outwardly against the inner surface of the respective bore 3 or 4, thereby forming a fluid-tight seal between the window and the bore. The device is capable of withstanding a fluid pressure substantially above ambient pressure and a temperature substantially above a typical ambient temperature (20°C). In one particular example of the invention the device is capable of operating at a fluid pressure of 70psi (5X10$^5$N/m$^2$) and a temperature of 70°C.

A light source 13, for example a laser, is attached to the body member 1 at the mouth of the bore 3 and is arranged to direct a narrow, parallel beam of light along the axis of the bore 3 and through the window 8 into the passageway 2 in the body member 1. The light source 13 is provided with an external screw thread 14 which engages the screw thread 10 towards the outer end of the bore 3. A light detector 15 is attached in a similar manner at the mouth of the second bore 4, to detect light passing through the window 8 into the bore.

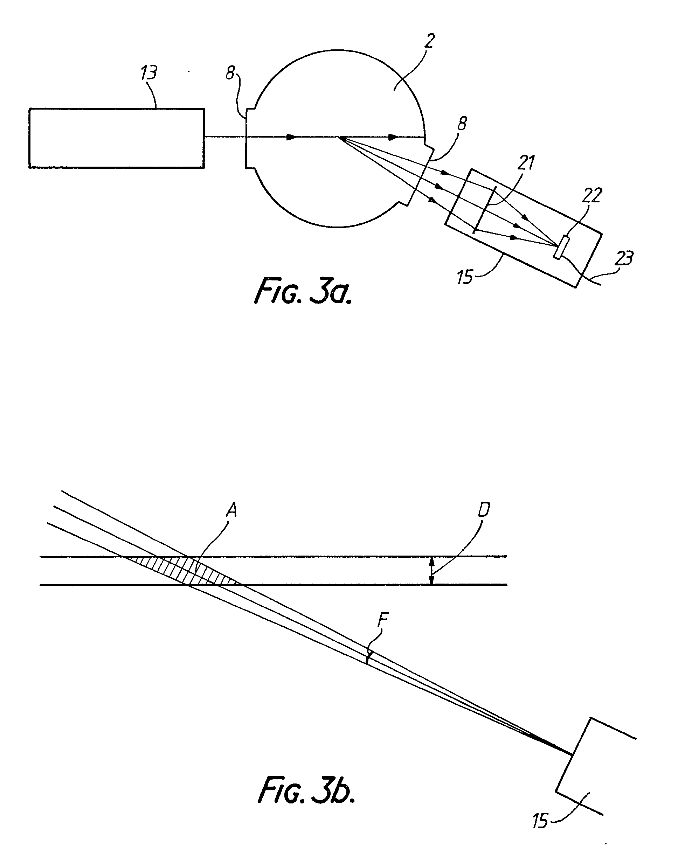

As shown in Figs. 3a and 3b, the narrow beam of light from the light source 13 passes through the first window 8 into the passageway 2. The beam passes approximately through the centre of the passageway 2 and is absorbed by the opposite wall. The beam has a diameter D of approximately 1mm and therefore illuminates only a relatively small fraction of the cross-sectional area of the passageway, and none of the incident light passes directly to the light detector 15, due to the offset angle of 25°.

The light detector 15 includes a converging lens 21, and a photocell 22. The lens 21 and the photocell 22 are so arranged that only light emanating from a small portion A of the cross-section of the passageway 2 and passing through the window 8 in the second bore 4 is focused onto the photocell and detected.

The lens 21 and the window 8 have a relatively large diameter in order to collect a substantial proportion of the light scattered from the small portion A, but without collecting any of the incident beam of light.

The small portion A of the cross-sectional area of the passageway which is monitored by the light director 15 coincides with the path of the incident beam of light, and only those particles which pass through the beam in the small portion A are sensed. Since the number of particles which pass through the small portion A per unit time is related to the total concentration of particles in the fluid flowing through the passageway 2, the concentration can be calculated.

The approximate area of the small portion A which is monitored by the light detector 15 is shaded in Fig. 3b and, as can be seen in that figure, its size is determined by the diameter D of the incident beam of light and the field of view F of the detector 15. Only particles which pass through the portion A - i.e. those particles which are illuminated by the beam of light whilst within the field of view of the detector 15 - are detected. In the embodiment of the invention described above the small portion A has a cross-sectional area of approximately 2.4mm², and the passageway has an area of 500mm². The small portion A therefore comprises less than $^1/_2$% of the total cross-sectional area of the passageway in this example. However the area occupied by the portion A may in other examples be higher (for example up to 1% or even 5%).

The photocell 22 is provided with an output terminal 23 which is connected to a device (not shown) for monitoring the signals derived from the photocell.

In use the cylindrical body member 1 is connected in-line with a pipe of a fluid-distribution system, so that the fluid distributed by the system flows through the passageway 2 with a high flow rate of, for example between 5 and 50 litres/minute.

If the fluid passing through the passageway 2 carries any particulate matter, light will be scattered from the incident beam whenever a particle passes through it. However, since the light detector 15 is sensitive only to light scattered from the small portion A of the passageway, only those particles which pass through the beam in the small portion A will be detected. Because light is scattered from a particle mostly in a forward direction, and since the window 8 and the lens 21 have a large aperture, the amount of light reaching the photocell 22 will be relatively large, and will depend on, amongst other factors, the size of the particle and the intensity of the incident beam of light.

When light falls on the photocell 22 a voltage pulse is generated which is monitored at the output 23 by the signal-monitoring device (not shown). The monitoring device senses the voltage pulse and, provided that the amplitude of the pulse exceeds a predetermined discrimination level, produces an output pulse independent of the height of the sensed pulse. When a stream of particles passes through the beam the monitoring device therefore produces a series of identical output pulses, the frequency of which is indicative of the concentration of particles in the fluid having a diameter greater than a predetermined minimum value. The device does not however indicate the actual sizes of the particles.

The monitoring device is connected to an alarm system which provides a warning whenever the particle concentration exceeds a predetermined level, that is whenever the number of received signals per unit time exceeds a predetermined level. The alarm could also be arranged to be triggered by either of the following conditions:

(i) a short-term surge of particles of above a certain level is detected, or

(ii) the detection rate exceeds the ability of the device to distinguish separate particles.

The monitoring device may also be connected to a counter which may have a digital or analogue display, and/or to a printer for providing a permanent record of the particle concentration in the fluid over an extended period of time. The monitoring device may also provide a computer-readable output.

The fluid-distribution system may include several particle-detecting devices positioned at different points around the system for providing a comprehensive particle detection system, and the outputs of the various devices may be connected to a computer for monitoring the particle-concentration at different parts of the fluid-distribution system simultaneously.

The particle-detecting devices may be activated manually, or by a clock, or by flow-sensing devices which activate the particle-detecting devices only when fluid is flowing through them. Alternatively, the devices may be activated by a central computer.

Other embodiments of the device are possible: for example, the cylindrical body 1 may be manufactured from other machinable or mouldable materials, for example polyvinylchloride (PVC), nylon or stainless steel, and the window 8 may be of other transparent materials, for example glass, or, particularly for use with corrosive liquids, sapphire. The O-rings 11 may be manufactured from silicone rubber or fluorine-based rubber, such as that sold under the trade mark "Viton", or other suitable material.

In another form of the device, the light source 13 is arranged to bring the incident beam of light to a focus at the centre of the passageway 2, and the light detector 15 is arranged to detect only light scattered from the focal point of the incident beam. In this way the size of the small portion of the passageway from which scattered light is detected may be reduced, and the intensity of light in that portion increased, thereby allowing even smaller particles to be detected whilst still using a large passageway to permit a high fluid flow-rate.

The light source for the particle-detecting device may include a laser as described or a filament bulb, and the light source may provide visible, infra-red or ultra-violet light. The light source may be located adjacent to the bore 3 or at a remote location, with the light transmitted into the bore by reflection, refraction or by an optical fibre. The light detector may similarly be remotely located and connected to the device by an optical fibre. A light-absorbing device, such as a Rayleigh horn, may be provided to absorb the incident beam after it has crossed the passageway.

The dimensions of the device may vary considerably from those given in the embodiment described above and in particular, if the device is used for detecting particles in a gas a passageway with a much smaller cross-sectional area may be used. In any case, however, the area of the small portion monitored by the light detector will be very small, for example 10% or less of the cross-section of the passageway.

The photocell 22 in the light detector may be a photo-diode, and may incorporate an operational amplifier to increase the size of the signal delivered to the monitoring device. In order to prevent electrical interference, the light-detector may be provided with mu-metal shielding.

Although the device is capable of accommodating a high flow-rate of fluid through the passageway 2, if it is desired to monitor fluids having extremely high flow-rates such as, for example, aviation fuel being pumped into an aircraft's fuel tanks, the device may be mounted in a by-pass pipe so as to receive only a proportion of the flow of fluid through the main pipeline. In this case, however, the flow rate through the by-pass can still be relatively high, for example 15 litres per minute. The particulate contaminants found in aviation fuel typically have a diameter of between 0.8 and 10 microns.

## Claims

1. A device capable of detecting individual particles of less than 10 microns diameter in a fluid flowing through the device, the device including a body having a passageway through which, in use, the fluid flows, a light source for directing a beam of light into the passageway and a light detector for detecting scattered light from a small portion only of the cross-sectional area of the passageway, the arrangement being such that light from the light source is unable to pass directly to the light detector.

2. A device according to claim 1, in which the small portion comprises less than 5% of the total cross-sectional area of the passageway.

3. A device according to claim 1 or claim 2, in which the passageway has a cross-sectional area of at least 100mm$^2$.

4. A device according to any one of claims 1 to 3 in which the light detector is arranged to detect forward-scattered light, with its optical axis subtending an angle of less than 30° with the axis of the incident beam of light.

5. A device according to any preceding claim, in which the light source is arranged to direct a parallel beam of light into the passageway.

6. A device according to claim 5, in which the diameter of the beam is less than 2mm.

7. A device according to any preceding claim in which the light detector includes a light sensor and means for focusing light emanating from the small portion of the passageway onto the sensor.

8. A device according to any preceding claim, in which the body is provided with a first fluid-tight window through which, in use, the beam of light enters the passageway, and a second fluid-tight window through which the light detector receives the scattered light.

9. A device according to any preceding claim, in which the output of the light detector is connected to a signal-monitoring device, the signal monitoring device being arranged to provide the same output in response to receipt of a signal from the light detector, regardless of the level of the signal, provided the level is above a predetermined threshold value.

10. A device for detecting particles in a fluid, the device including a body having a passageway through which, in use, the fluid flows, a light source for directing an incident beam of light into the passageway and a light detector for detecting light scattered from a small portion of the passageway, the light detector including a light sensor and a lens for focusing light emanating from the small portion of the passageway onto the sensor, the optical axis of the light detector being angularly displaced from the axis of the incident beam by an amount sufficient to prevent the incident beam from falling directly upon the sensor.

11. A fluid-distribution system including a particle-detecting device as claimed in any preceding claim and a pipeline for distributing a fluid, the particle-detecting device being interposed in the pipeline so that, in use, all the fluid distributed by the pipeline passes through the device.

12. A system according to claim 11 and including a plurality of particle-detecting devices, in which all the particle-detecting devices are connected to a computer for monitoring the number of particles at a plurality of different points around the system.

13. A deionised water distribution system including a particle-detecting device as claimed in any one of claims 1 to 10 and a pipeline for distributing deionised water, the particle-detecting device being arranged to monitor deionised water flowing through the pipeline.

14. A system according to claim 13, in which the particle-detecting device is interposed in the pipeline so that, in use, all the deionised water flowing through the pipeline passes through the device.

15. A method of detecting individual particles of less than 10 microns diameter in a fluid, in which the fluid is caused to flow through a passageway, a beam of light is directed into the fluid in the passageway and light scattered from a small portion of the cross-sectional area of the passageway is detected without detecting the incident beam of light directly.

16. A method according to claim 15, in which the flow-rate of fluid through the passageway is at least 1 litre per minute.

FLOW

FIG. I.

FIG. 2.

EP 0 327 353 A1

Fig. 3a.

Fig. 3b.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | PATENT ABSTRACTS OF JAPAN, vol. 9, no. 101 (P-353)[1824], 2nd May 1985; & JP-A-59 224 542 (HITACHI SEISAKUSHO K.K.) 17-12-1984 * Abstract * | 1,5,10, 11,15 | G 01 N 21/53 |
| X | PATENT ABSTRACTS OF JAPAN, vol. 9, no. 127 (P-360)[1850], 31st May 1985; & JP-A-60 11 145 (HITACHI SEISAKUSHO K.K.) 21-01-1985 * Abstract * | 1,5,10, 11,15 | |
| X | APPLIED OPTICS, vol. 18, no. 10, 15th May 1979, pages 1632-1645, Optical Society of America, New York, US; D. HOLVE et al.: "Optical particle sizing for in situ measurements" * Pages 1634-1636 * | 1,4-7 | |
| A | PATENT ABSTRACTS OF JAPAN, vol. 9, no. 289 (P-405)[2012], 15th November 1985; & JP-A-60 128 331 (HATSUPII KAGAKU K.K.) 09-07-1985 * Abstract * | 1 | TECHNICAL FIELDS SEARCHED (Int. Cl.4) |
| A | US-A-3 713 743 (R.J. SIMMS) * Columns 3-4 * | 1,8,11 | G 01 N 21/53 G 01 N 15/14 |
| A | US-A-3 094 625 (R. HENDRICK) * Columns 2-3 * | 1 | |
| A | PROCEEDINGS OF THE SPIE, Applications of Optics in Medicine and Biology, vol. 89, 1976, pages 22-28; K. SHIMIZU et al.: "Scattering pattern analysis of bacteria" * Page 24 * | 1 | |

-/-

The present search report has been drawn up for all claims

| Place of search | Date of completion of the search | Examiner |
|---|---|---|
| THE HAGUE | 12-05-1989 | BOEHM CH.E.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 7, no. 38 (P-176)[1183], 16th February 1983; & JP-A-57 190 249 (TOKYO SHIBAURA DENKI K.K.) 22-11-1982 * Abstract * ----- | 1 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 12-05-1989 | BOEHM CH.E.D. |

EPO FORM 1503 03.82 (P0401)